**Europäisches Patentamt**

**European Patent Office**

**Office européen des brevets**

(11) Publication number: **0 089 828**

**B1**

## (12) EUROPEAN PATENT SPECIFICATION

(45) Date of publication of patent specification: **08.02.89**

(21) Application number: **83301520.9**

(22) Date of filing: **18.03.83**

(51) Int. Cl.⁴: **G 06 F 15/20**

(54) **System for providing operator displays of dynamic plant operation data.**

(30) Priority: **22.03.82 US 360858**

(43) Date of publication of application:
**28.09.83 Bulletin 83/39**

(45) Publication of the grant of the patent:
**08.02.89 Bulletin 89/06**

(84) Designated Contracting States:
**DE FR GB IT**

(56) References cited:
**EP-A-0 043 731**
**WO-A-81/03079**
**US-A-3 731 070**
**US-A-3 750 465**
**US-A-4 218 734**

**Beckwith et al:"Mechanical measurement, 3rd edition Addison-Wesley, published on 4 Jan.1982**

(73) Proprietor: **THE BABCOCK & WILCOX COMPANY**
**1010 Common Street P.O. Box 60035**
**New Orleans Louisiana 70160 (US)**

(72) Inventor: **Agarwal, Suresh C.**
**26011 Lakeshore Boulevard**
**Euclid Ohio 44132 (US)**
Inventor: **Janecek, Edward D.**
**2320 Westminster Road**
**Cleveland heights Ohio 44118 (US)**
Inventor: **Keyes, Marion A.**
**120 Riverstone Drive**
**Chagrin Falls Ohio (US)**
Inventor: **Schoeffler, James D.**
**4090 Carroll Boulevard**
**University Heights Ohio (US)**
Inventor: **Willey, Michael S.**
**8653 Apple Hill Road**
**Chagrin Falls Ohio (US)**

(74) Representative: **Cotter, Ivan John et al**
**D. YOUNG & CO. 10 Staple Inn**
**London WC1V 7RD (GB)**

**Description**

This invention relates to systems for providing operator displays of dynamic plant operation data.

Control computer systems are commonly used to monitor a number of processes occurring in manufacturing and processing facilities. The monitoring process at a minimum comprises plant data acquisition via a multiplexer, data processing in the computer system, and data display on elements such as cathode ray tubes.

Data display on cathode ray tubes include text material comprising alphanumeric description and/or graphic symbols, static displays comprising data independent of plant dynamics, and dynamic displays comprising data, both measured and calculated, which is directly related to plant dynamics. Of these categories dynamic data display is of paramount importance to operating personnel as it gives the current plant status.

To provide the display of dynamic data on a cathode ray tube, process signal data is acquired via a multiplexer, processed in a computer system and usually stored in a data base memory. Dynamic data is then accessed from the data base memory by a display program and transferred to the cathode ray tube. The prevailing practice has been to periodically access and transfer process data to a cathode ray tube at a fixed prespecified time interval known as an update period. This practice is commonly referred to as continuous updating of CRT displays. With this technique, changes in plant status are displayed only after the update period has elapsed, that is, on the next update cycle. This practice is contrary to the needs of operating personnel who sometimes need to know current changes in plant status without delay to prevent a fast moving crisis situation from occurring.

Furthermore, updating of all dynamic data on a cathode ray tube display, including data which does not change over an update cycle, increases the volume of data accessed from the data base and transmitted to the CRT, thus increasing system load for display updating. Consequently, system response time for display, time between occurrence of an event in plant and its indication on cathode ray tube, is unnecessarily increased. This further adds to delays in the plane operator's decision making and slows the corrective action process. The probability exists in the prior art that a rapidly changing process variable may not be displayed on the cathode ray tube at all. Thus it is seen that the prior are techniques do not provide for timely updating of cathode ray tube displays.

Because of the foregoing, it has become desirable to develop a display update system which provides for minimum display time of critical dynamic data.

US Patent No. US—A—4 218 734 discloses a system for providing an operator display of dynamic plant operation data, the system comprising:

means for providing current operating plant variables;

storage means for storing the current operating plant variables;

display means for displaying the dynamic plant operation data; and

exception control means operative to compare the absolute difference between the value of data displayed on the display means and the current stored data in the storage means with a reference value and to update the display means by displaying the current stored data only if the absolute difference exceeds the reference value.

The present invention provides a system as just described, characterised in that:

the variables providing means is operative to provide a predetermined series of different current operating plant variables and also a signal indicating the end of the series; and

the exception control means is responsive to the signal indicating the end of the series to sequentially carry out its function for the data corresponding to each of the variables of the series until the data corresponding to the last of the variables has been processed to determine whether the display means should be updated in respect thereof.

A preferred embodiment of the present invention described hereinbelow can solve or at least alleviate the aforementioned problems associated with the prior art by providing a display system for updating dynamic data on a display means, such as cathode ray tube display, only when the absolute value of the difference between data on the cathode ray tube display and its current value exceeds a predetermined amount. In this manner, data related to all process variables is neither accessed from the data base memory nor transmitted to the operator display unless critical, thus minimizing system response time while updating the operator display with events or changes in plant status as they occur. Furthermore, data corresponding to a predetermined series of variables to be monitored is stored and the exception control means is triggered at the end of the series to sequentially process each variable in the series, to determine whether the corresponding display should be updated, until the end of the series is reached.

The invention will now be further described, by way of illustrative and non-limiting example, with reference to the accompanying drawings, in which:

Figure 1 is a block diagram of an operator display updating system embodying the present invention; and

Figure 2 is a block diagram of an exception update module of the operator display updating system of Figure 1.

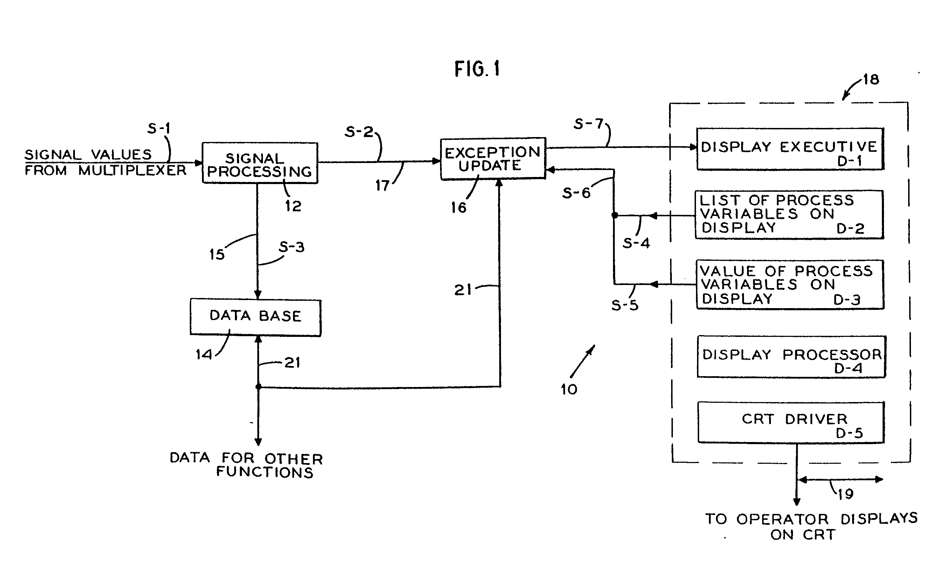

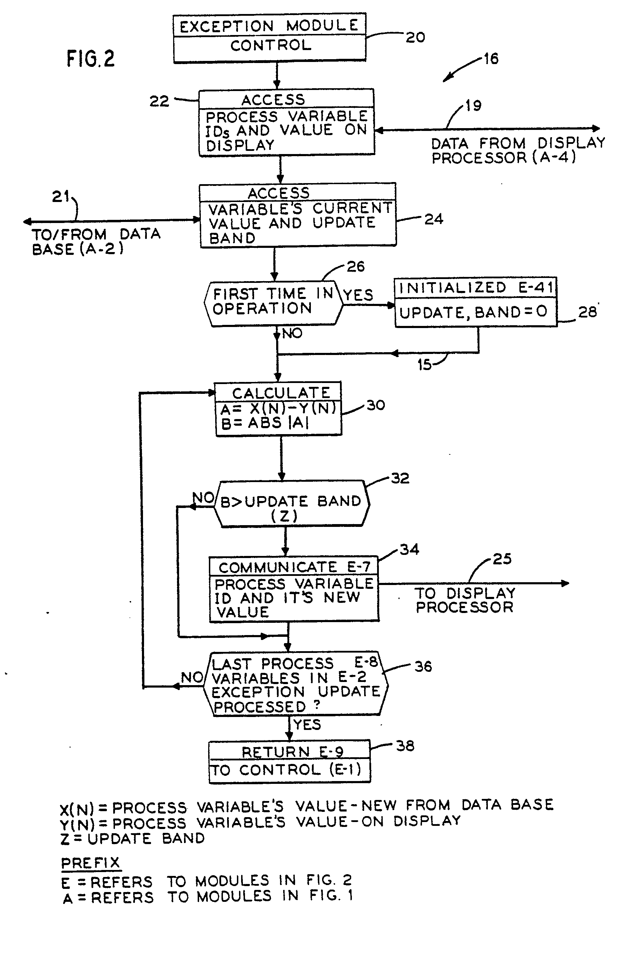

Figure 1 shows an operator display update system 10 comprising a signal processing module 12, a data base memory module 14, an exception update module 16, and a display update processing module or subsystem 18.

In operation, signal values from plant process sensors (not shown) are brought into the signal processing module 12 by commonly known techniques and components. Each signal value is filtered for noise, amplified and converted to compatible engineering units in the signal processing module 12 by commonly known techniques. Processed signal values are communicated to the data base memory module 14 along link 15 for storage in a known manner. The signal processing module 12 also generates a signal at the end of each processing cycle and communicates it along connecting link 17 to the exception update module 16 by known techniques. Receipt of this signal by the module 16 activates the exception update module 16.

With particular reference to Fig. 2, the exception update module 16 is shown as comprising control module 20, access modules 22 and 24, status check module 26, initialization module 28, calculate unit 30, check unit 32, communication facility 34, check module 36, and return unit 38.

Signals from the signal processing module 12 of Fig. 1 as received by the control module 20 of the exception update module 16 triggers its execution. Upon this execution of the control module 20, access module 22 accesses a list of the process variables on the operator display and their current value on display from sub-modules D2 and D4 respectively of the display processor module 18 of Fig. 1 along line 19. The access module 24 next obtains new values for the display from the data base memory 14 along line 21 for each process variable in the list accessed via the access module 22 described above.

Next, a check is made whether the exception update module 16 is in execution for the first time by the module 26. If it is in execution for the first time, then all display update band values, accessed by access module 24, are set to zero. If it is not the first time, the module 26 is bypassed and execution goes to module 30.

The absolute value of the difference between the new value and the current value on display of a process variable is calculated in module 30, and checked whether it is greater than the associated display update band in update module 32. If the absolute value is not greater than the display, then execution goes to the check facility module 36; otherwise, a message comprising the process variable identifier, its new value and indicator for detection of exception is formed and communicated to the display executive sub-module D1 of the display processor module 18 (shown in Fig. 1) by the communication facility 34 along line 19, and execution continues at the checking module 36.

In the check module 36, a test is made of whether the last process variable in the list obtained via the access module 22 has been processed. If it is not, then execution returns to calculate module 30 for exception update processing of the next process variable in list obtained via access module 24, otherwise execution is returned to exception module control module 20 by the return facility 38.

Now returning to Fig. 1, after receiving process variable identifiers, its new value and indicator of exception update detection, display executive sub-module D1 of display processor 18 replaces the existing value in the sub-module D3 by the new value, and outputs it to CRT operator display via display update processor, D4, and CRT driver D5. It should be noted that sub-modules D1, D2, D3, D4, and D5 of module 18 employ commonly known techniques and equipment.

## Claim

A system for providing an operator display of dynamic plant operation data, the system comprising:
  means (12) for providing current operating plant variables;
  storage means (14) for storing the current operating plant variables;
  display means (18) for displaying the dynamic plant operation data; and
  exception control means (16) operative to compare the absolute difference between the value of data displayed on the display means and the current stored data in the storage means (14) with a reference value and to update the display means (18) by displaying the current stored data only if the absolute difference exceeds the reference value;
  characterised in that:
  the variables providing means (12) is operative to provide a predetermined series of different current operating plant variables and also a signal indicating the end of the series; and
  the exception control means (16) is responsive to the signal indicating the end of the series to sequentially carry out its function for the data corresponding to each of the variables of the series until the data corresponding to the last of the variables has been processed to determine, by means of the reference value, whether the display means (18) should be updated in respect thereof.

## Patentanspruch

System zum Vorsehen einer Operatorzeige von dynamischen Werkwirkungsdaten mit:
  einer Einrichtung (12) zum Vorsehen laufender Variabler des im Betrieb befindlichen Werkes;
  einer Speichereinrichtung (14) zum Speichern der laufenden Variablen des im Betrieb befindlichen Werkes;
  einer Anzeigeeinrichtung (18) zum Darstellen der dynamischen Werkwirkungsdaten; und
  einer Abweichungskontrolleinrichtung (16), welche im Betrieb die absolute Differenz zwischen dem Wert der auf der Anzeigeeinrichtung dargestellten und den in der Speichereinrichtung (14) laufend gespeicherten Daten mit einem Referenzwert vergleicht und die Anzeigeeinrichtung (18) aktualisiert, indem die laufend gespeicherten Daten nur dann angezeigt werden, wenn die absolute Differenz den Referenzwert übersteigt;

dadurch gekennzeichnet, daß:

die Einrichtung (12) zum Bereitstellen der Variablen so betreibbar ist, daß sie eine vorbestimmte Reihe von verschiedenen laufenden Variablen des im Betrieb befindlichen Werkes vorsieht, ebenso wie ein Signal, welches das Ende der Reihe anzeigt; und

daß die Abweichungskontrolleinrichtung (16) auf das Signal, welches das Ende der Reihe anzeigt, anspricht, um in der Folge ihre Funktion für die Daten auszuführen, welche jeder der Variablen der Reihe entsprechen, bis die Daten, welche der letzten der Variablen entsprechen, verarbeitet sind, um mit Hilfe des Referenzwertes zu bestimmen, ob die Anzeigeeinrichtung (18) in Bezug hierauf aktualisiert werden muß.

**Revendication**

Système pour fournir un affichage pour opérateurs de données de fonctionnement dynamiques d'une installation, système comportant:

des moyens (12) en vue de fournir des variables de fonctionnement courantes de l'installation;

des moyens de mémoire (14) en vue de mémoriser les variables de fonctionnement courantes de l'installation;

des moyens d'affichage (18) en vue d'afficher les données de fonctionnement dynamiques de l'installation; et

des moyens de contrôle d'écarts (16) en vue de comparer la différence absolue entre la valeur de données affichées sur les moyens d'affichage et les données courantes mémorisées dans les moyens de mémoire (14) à une valeur de référence et en vue de mettre à jour les moyens d'affichage (18) en affichant les données courantes mémorisées seulement si la valeur absolue dépasse la valeur de référence;

caractérisé en ce que:

les moyens (12) délivrant les variables fournissent une série prédéterminée de variables de fonctionnement courantes différentes de l'installation et également un signal indiquant la fin de la série; et

les moyens de contrôle d'écarts (16) sont sensibles au signal indiquant la fin de la série pour remplir séquentiellement leur fonction pour les données correspondant à chacune des variables de la série jusqu'à ce que les données correspondant à la dernière des variables aient été traitées pour déterminer, au moyen de la valeur de référence, si les moyens d'affichage (18) doivent être mis à jour par rapport à celle-ci.

FIG. 1

FIG.2

X(N) = PROCESS VARIABLE'S VALUE - NEW FROM DATA BASE
Y(N) = PROCESS VARIABLE'S VALUE - ON DISPLAY
Z = UPDATE BAND

PREFIX
E = REFERS TO MODULES IN FIG. 2
A = REFERS TO MODULES IN FIG. 1

2